# FASCICULE DE BREVET EUROPEEN

(11) **EP 0 385 899 B1**
(45) Date de publication et mention de la délivrance du brevet: **11.05.1994**
(21) Numéro de dépôt: 90440020.7
(22) Date de dépôt: 27.02.1990
(51) Int. Cl.: A01D 78/10, A01B 73/04

(54) **Machine de fenaison comportant plusieurs rotors**
Heuwerbungsmaschine mit mehreren Kreiseln
Hay-making machine having a plurality of rotors

(30) Priorité: 01.03.1989 FR 8902875
(43) Date de publication de la demande: 05.09.1990
(73) Titulaire: KUHN S.A., F-67700 Saverne (FR)
(72) Inventeur:
(74) Mandataire: Andres, Jean-Claude

(56) Documents cités:
- EP-A- 0 270 052
- EP-A- 0 296 666
- EP-A- 0 300 937
- DE-A- 2 654 643
- GB-A- 2 057 239
- US-A- 4 178 998
- US-A- 4 206 816
- US-A- 4 512 416
- US-A- 4 615 397

## Description

La présente invention se rapporte à une machine de fenaison comportant plusieurs rotors de fanage et/ou d'andainage qui sont reliés à un bâti porteur composé d'un tronçon central et de tronçons latéraux disposés de part et d'autre du tronçon central, lesquels tronçons sont articulés entre eux au moyen d'axes de pivotement dirigés dans la direction d'avancement et autour desquels les tronçons latéraux peuvent être déplacés avec des vérins hydrauliques pour le transport, lesdits rotors étant entraînés en rotation durant le travail au moyen d'arbres de transmission qui sont logés dans les tronçons constituant le bâti et qui sont reliés entre eux par des accouplements situés à proximité des axes de pivotement entre les tronçons.

Une machine de ce genre est connue dans la demande de brevet FR-A-2 604 331. Cette machine comporte au total six rotors. Le tronçon central de son bâti porte deux rotors, tandis que chaque tronçon latéral est formé en deux parties articulées entre elles et portant chacune un rotor. Pour le transport, les tronçons latéraux sont repliés vers le haut afin de réduire la largeur de la machine. De plus, les parties extérieures des tronçons latéraux sont dirigées vers le milieu de la machine en vue d'abaisser sa hauteur.

La largeur de travail d'une telle machine est définie par les largeurs des zones de travail de ses rotors. Or, comme les largeurs de ces zones ne peuvent guère être augmentées si on veut maintenir une bonne qualité de travail, cette machine ne permet pas d'atteindre les rendement recherchés dans les grandes exploitations agricoles.

Le brevet US-A-4 206 816 décrit une charrue sous-soleuse composée de plusieurs sections portant chacune un soc. Toutes les sections qui sont situées entre les deux sections extrêmes ont sensiblement les mêmes dimensions. Pour le transport plusieurs sections centrales restent au sol tandis que de chaque côté trois sections latérales sont repliées vers le haut en forme de U renversé. Cette machine comporte quatre vérins hydrauliques pour assurer ce repliage. Ces vérins doivent être actionnés dans un ordre bien défini lors du repliement et du déploiement. Par conséquent il est nécessaire d'avoir des moyens spéciaux tels que des verrous pour empêcher toute fausse manoeuvre. En sus, l'ensemble de l'équipement hydraulique utilisé sur cette charrue est relativement coûteux.

La présente invention a notamment pour but de proposer une machine de fenaison ayant une très importante largeur de travail et un encombrement général réduit au transport de manière à ce qu'elle puisse facilement être transportée sur les routes et comportant des moyens de transposition simples.

A cet effet, une importante caractéristique de l'invention consiste en ce que chaque tronçon latéral du bâti est composé de trois parties portant chacune au moins un rotor, que ces parties sont articulées entre elles au moyen d'axes dirigés dans la direction d'avancement, que chacune de ces parties est déplaçable d'un angle d'environ 90° autour de son axe d'articulation avec la partie voisine ou le tronçon central et qu'elle comporte deux vérins hydrauliques dont chacun assure à la fois le repliement en forme de U renversé ou le déploiement des parties d'un des tronçons latéraux ainsi que le déplacement en hauteur d'un de ces tronçons latéraux, chaque vérin hydraulique étant relié au tronçon central et à deux bielles dont la première est reliée à la partie intérieure et la deuxième à la partie extérieure du tronçon latéral correspondant.

Grâce à cet agencement, la machine de fenaison selon l'invention peut comporter huit rotors. Il est ainsi possible d'atteindre une largeur de travail nettement supérieure à celle de la machine connue tout en obtenant un encombrement général pratiquement identique dans la position de transport.

Les moyens utilisés pour replier et déployer la machine sont simples. Lorsqu'elle est transposée de la position de travail dans la position de transport, chaque vérin hydraulique assure en premier lieu le repliement sensiblement en forme de U des différentes parties du tronçon latéral correspondant. Ensuite, le même vérin déplace toutes ces parties vers le haut, par rapport au tronçon central, dans la position de transport. Inversement pour repasser dans la position de travail, chaque vérin déplace d'abord le tronçon latéral correspondant vers le bas. Ensuite, il provoque le déploiement de la partie intermédiaire et de la partie extérieure dudit tronçon latéral.

D'autres caractéristiques et avantages de l'invention apparaîtront dans les autres revendications, ainsi que dans la description ci-après d'un exemple de réalisation non limitatif de l'invention, avec référence aux dessins annexés dans lesquels :
- la figure 1 représente une vue arrière d'une machine selon l'invention, avec une moitié en position de travail et l'autre moitié en position de transport et/ou de dépose ;
- la figure 2 représente, à plus grande échelle, une coupe au niveau de la partie intermédiaire d'un tronçon latéral du bâti de la machine en position de travail ;
- la figure 3 représente une coupe analogue à celle de la figure 2 lorsque le tronçon latéral est en position de transport.

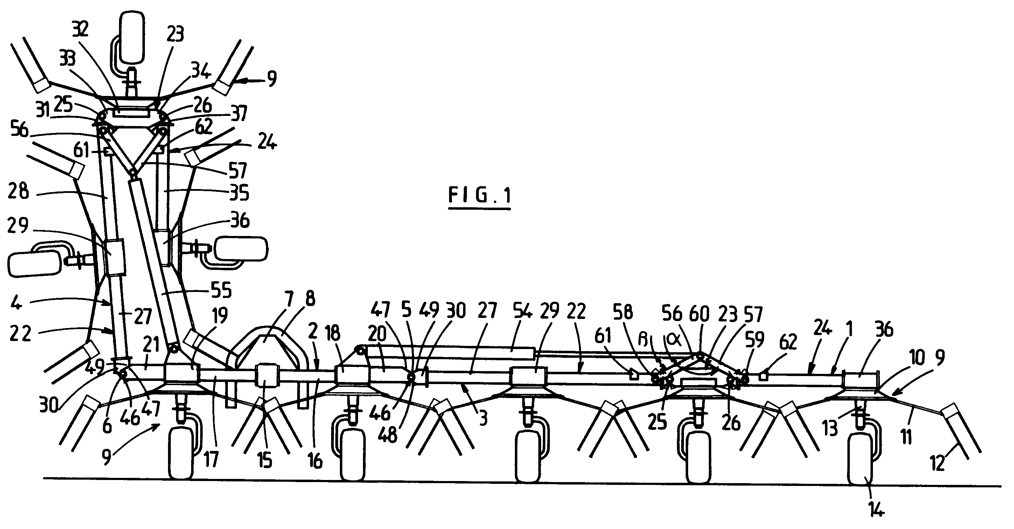

La machine de fenaison représentée sur la figure 1 comporte un bâti (1) composé d'un tronçon central (2) et de deux tronçons latéraux (3 et 4). Ces tronçons latéraux (3 et 4) se situent de part et d'autre du tronçon central (2) et sont articulés sur ce tronçon au moyen d'axes (5 et 6) dirigés dans la direction d'avancement de la machine. Une poutre porteuse (7), qui est également dirigée dans la direction d'avancement, est reliée au tronçon central (2). Cette poutre (7) est munie à son extrémité avant d'un chevalet (8) destiné à permettre l'accouplement de la machine au dispositif de relevage trois points du tracteur utilisé pour animer la machine.

Dans l'exemple représenté, la machine comporte huit rotors (9) situés sous le bâti (1). Chacun de ces rotors (9) est constitué par un moyeu (10) auquel sont fixés plusieurs bras (11) portant des fourches de travail (12) à leurs extrémités extérieures. Chaque moyeu (10) est monté de manière à pouvoir tourner sur un axe support fixe (13) sensiblement vertical ou incliné dans la direction d'avancement de la machine. Ces axes (13) sont fixés au bâti (1) et portent à leurs extrémités inférieures des roulettes (14) permettant de déplacer la machine sur le sol durant le travail.

Le tronçon central (2) du bâti (1) de la machine se compose notamment d'un carter (15), de deux tubes (16 et 17) et de deux boîtiers (18 et 19). Chacun de ces tubes (16 et 17) est relié avec une de ses extrémités au carter (15) et avec son autre éxtrémité à un des boîtiers (18 et 19). Sous chaque boîtier (18, 19) est disposé un rotor (9). Le tronçon central (2) porte ainsi deux rotors (9). Chacun desdits boîtiers (18 et 19) comporte également sur le côté opposé à celui sur lequel se situe le tube (16, 17) correspondant, des pattes (20 et 21) avec des logements pour les axes d'articulation (5 et 6) des tronçons latéraux (3 et 4).

Chaque tronçon latéral (3, 4) se compose de trois parties (22, 23, 24) portant chacune au moins un rotor (9). Ces trois parties (22, 23, 24) de chaque tronçon latéral (3, 4) sont articulées entre elles au moyen d'axes (25 et 26) dirigés dans la direction d'avancement de la machine. Elles sont déplaçables d'angles d'environ 90° autour desdits axes (25 et 26), de telle sorte qu'elles puissent être repliées pour former ensemble pratiquement un U. La partie intérieure (22) de chaque tronçon latéral (3, 4) se compose notamment de deux tubes (27 et 28) et d'un boîtier (29), sous lequel se situe un rotor (9). Le premier tube (27) comporte à une de ses extrémités des pattes (30) avec des logements pour l'axe d'articulation (5, 6) et porte à son autre extrémité le boîtier (29). Le second tube (28) est fixé par une de ses extrémités au dit boîtier (29) et présente à son autre extrémité des pattes (31) avec des logements pour l'axe d'articulation (25) avec la partie intermédiaire (23) du tronçon latéral (3, 4).

Cette partie intermédiaire (23) a des dimensions très réduites. Elle se compose essentiellement d'un boîtier (32) avec un rotor (9), ledit boîtier étant muni sur deux côtés opposés de pattes (33 et 34) qui possédent des logements pour les axes d'articulation (25 et 26). La partie extérieure (24) de chaque tronçon latéral (3, 4) se compose d'un tube (35) portant à l'une de ses extrémités un boîtier (36) avec un rotor (9) et, à son autre extrémité, des pattes (37) avec des logements pour l'axe d'articulation (26).

La partie intermédiaire (23) de chaque tronçon latéral (3, 4) comporte à chacune de ses extrémités au moins une butée (38, 39) dirigée vers le bas (c'est-à-dire vers le sol, lorsque la machine est en position de travail) et au moins une butée (40, 41) dirigée vers le haut. De même, la partie intérieure (22) et la partie extérieure (24) comportent chacune à son extrémité reliée à ladite partie intermédiaire (23) au moins une butée (42, 43) dirigée vers le bas et au moins une butée (44, 45) dirigée vers le haut. Ces butées (42 à 45) coopèrent avec les butées précitées (38 à 41) de la partie intermédiaire (23) en vue de limiter les pivotements entre les différentes parties qui composent les tronçons latéraux (3, 4). Aux deux extrémités du tronçon central (2) et aux extrémités des parties intérieures (22) des tronçons latéraux (3, 4) qui sont articulées audit tronçon central, sont également prévues des butées (46 à 49) pour limiter les déplacements vers le bas et vers le haut autour des axes d'articulation (5 et 6).

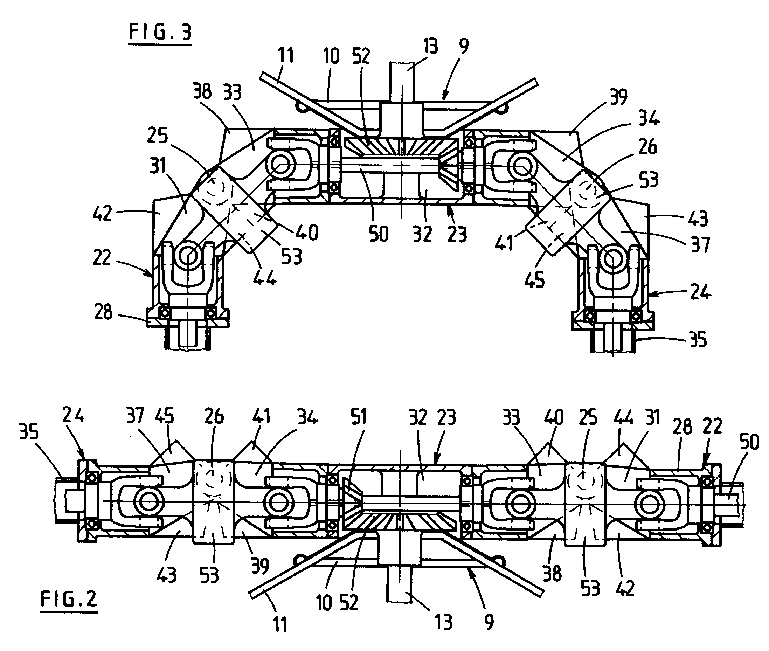

Les différents rotors (9) peuvent être entraînés en rotation autour de leurs axes supports (13) au moyen d'arbres de transmission (50) logés dans les tronçons (2, 3 et 4). Au niveau de chaque boîtier (18, 19, 29, 32 et 36), ces arbres de transmission (50) comportent un pignon d'entraînement (51) qui engrène avec une couronne (52) solidaire du rotor (9) correspondant. D'autre part, au niveau de chaque articulation entre les tronçons (2, 3 et 4) et entre les différentes parties (22, 23 et 24) composant les tronçons latéraux (3 et 4), lesdits arbres de transmission (50) sont accouplés entre eux au moyen de joints de cardan double (53) (voir figures 2 et 3). D'autres types d'accouplements qui permettent des déplacements d'au moins 90° entre les arbres de transmission (50) pourraient également être utilisés.

L'arbre de transmission (50) qui est logé dans le tronçon central (2) traverse le carter (15). A l'intérieur de celui-ci, il comporte un pignon d'entraînement qui est en prise avec un autre pignon solidaire d'un bout d'arbre qui s'étend hors du carter (15), sur le côté avant de la machine. Ce bout d'arbre peut être relié à un arbre de prise de force du tracteur d'entraînement, par l'intermédiaire d'un arbre à cardan.

Il ressort également de la figure 1 que la machine comporte deux vérins hydrauliques (54 et 55) pour déplacer les trois parties (22, 23 et 24) des tronçons latéraux (3 et 4). Ces vérins (54 et 55) se situent au-dessus du bâti (1), mais légèrement en arrière par rapport aux tronçons (2, 3 et 4). Chacun de ces vérins (54, 55) est articulé sur le tronçon central (2) et sur deux bielles (56 et 57) qui ont sensiblement la même longueur. La première bielle (56) est reliée à la partie intérieure (22) au moyen d'un pivot (58) et la deuxième bielle (57) est reliée à l'aide d'un pivot (59) à la partie extérieure (24) du tronçon latéral (3 ou 4) correspondant.

Dans la position de travail, ces deux bielles (56 et 57) sont disposées en forme de V et de telle sorte que la deuxième bielle (57) forme un angle (α) avec le vérin hydraulique (54 ou 55) correspondant qui est plus important que l'angle (β) que forme la première bielle (56) avec ledit vérin. Par ailleurs, ces deux bielles (56 et 57) sont liées à leur vérin hydraulique (54 ou 55) par l'intermédiaire d'un axe d'articulation (60). Dans la position de travail, chaque axe (60) se situe au-dessus de la partie intermédiaire (23) du tronçon latéral (3 ou 4) correspondant.

Selon une variante de réalisation non représentée, les deuxièmes bielles (57) peuvent comporter un trou oblong à travers lequel passe le pivot (59) solidaire de la partie extérieure (24) du tronçon latéral (3, 4) correspondant. Chaque partie extérieure (24) peut alors se déplacer d'un certain angle par rapport à la partie intermédiaire (23) pour mieux suivre les dénivellations du sol.

D'autre part, la partie intérieure (22) et la partie extérieure (24) de chaque tronçon latéral (3 ou 4) comporte chacune une butée (61, 62). Celles-ci se placent contre les bielles (56 et 57) dans la position de transport pour mieux définir cette position.

Dans la position de travail, telle que représentée sur le côté droit de la machine sur la figure 1, tous les rotors (9) sont sensiblement alignés et se trouvent au niveau du sol. Ils peuvent alors être entraînés en rotation autour de leurs axes supports (13), de sorte qu'ils tournent deux à deux en convergence à l'avant -vu dans le sens d'avancement de la machine-. Par suite de cette rotation, leurs fourches (12) déplacent le fourrage qui se trouve sur le sol et assurent un fanage d'excellente qualité. Il est évident que des rotors destinés à andainer le fourrage ou bien des rotors permettant de réaliser du fanage et de l'andainage pourraient également équiper cette machine.

Pour le transport et/ou la dépose de la machine, les deux tronçons latéraux (3 et 4) sont repliés et déplacés vers le haut, autour des axes d'articulation (5 et 6), dans la position représentée sur la moitié gauche de la machine sur la figure 1 et sur la figure 3. Ces repliements sont effectués au moyen des vérins hydrauliques (54 et 55) qui peuvent être commandés à partir du tracteur d'entraînement. Lorsque ces vérins (54 et 55) se rétractent, ils exercent en premier lieu une traction sur la partie extérieure (24) des tronçons latéraux (3 et 4). Ceci provient du fait qu'au début de l'opération, la deuxième bielle (57) tire immédiatement sur ladite partie extérieure, tandis que la première bielle (56) pivote simplement autour de son articulation (58) sur la partie intérieure (22).

La partie extérieure (24) de chaque tronçon (3, 4) est alors déplacée vers le haut, autour de son axe d'articulation (26). Lorsque ce déplacement atteint environ 90°, la butée (45) arrive en contact avec la butée (41) de la partie intermédiaire (23) correspondante. Dès lors, les deux parties (24 et 23) pivotent ensemble autour de l'axe d'articulation (25) avec la partie intérieure (22) jusqu'à ce que la butée (40) de la partie intermédiaire (23) rencontre la butée (44) de ladite partie intérieure. A ce stade, la partie intermédiaire (23) a également pivoté d'environ 90°, de telle sorte que les trois parties (22, 23 et 24) sont pratiquement repliées en forme de U. Ensuite, la traction effectuée par les vérins (54 et 55) fait pivoter ensemble les trois parties (22, 23 et 24) de chaque tronçon latéral (3, 4) vers le haut, autour de l'axe d'articulation (5, 6) avec le tronçon central (2). Ce pivotement vers le haut est limité par les butées (47 et 49) prévues d'une part sur le tronçon central (2) et d'autre part sur les parties intérieures (22). Les trois parties (22, 23 et 24) de chaque tronçon latéral (3 ou 4) ont alors été déplacés d'un angle d'environ 90° de sorte qu'elles forment un U renversé. Dans cette position, le rotor (9) de chaque partie intérieure (22) est dirigé vers le côté extérieur, celui de chaque partie centrale intermédiaire (23) est dirigé vers le haut et celui de chaque partie extérieure (24) est dirigé vers le milieu de la machine. L'encombrement de la machine est alors très réduit, de sorte qu'elle puisse être transportée sur les routes et qu'elle n'occupe qu'un faible volume lorsqu'elle est remisée pendant la période où elle n'est pas utilisée. Un dispositif de verrouillage mécanique peut éventuellement être prévu pour bloquer les tronçons latéraux dans cette position.

D'autre part, étant donné que les angles entre les différentes parties (2, 22, 23 et 24) qui sont repliées ne sont que de l'ordre de 90°, les joints (53) entre les arbres de transmissions (50) qui assurent l'entraînement en rotation des rotors (9), sont en mesure de tourner sans risque de rupture. De ce fait, il n'est pas nécessaire de couper l'entraînement des rotors (9) avant chaque déplacement des tronçons latéraux (3 et 4).

Pour revenir dans la position de travail, les vérins hydrauliques (54 et 55) sont commandés pour qu'ils s'allongent. Ils déplacent alors les trois parties (22, 23 et 24) de chaque tronçon latéral (3, 4) vers le bas, autour de l'axe d'articulation (5, 6) correspondant avec le tronçon central (2). Ensuite, dès que le rotor (9) de chaque partie intérieure (22) touche le sol, chaque partie intermédiaire (23) pivote autour de son axe d'articulation (25), jusqu'à ce que son rotor (9) touche le sol. Enfin, dans un dernier temps, chaque partie extérieure (24) se déplace autour de son axe d'articulation (26), jusqu'à ce que son rotor (9) touche également le sol. Dans cette nouvelle position, tous les rotors (9) sont de nouveau alignés pour le travail.

Il est bien évident que l'invention n'est pas limitée au mode de réalisation décrit et représenté sur les dessins annexés. Des modifications restent possibles, notamment en ce qui concerne la constitution des divers éléments, ou par substitution d'équivalents techniques, sans sortir pour autant du domaine de protection tel que défini par les revendications.

## Revendications

1. Machine de fenaison comportant plusieurs rotors (9) de fanage et/ou d'andainage qui sont reliés à un bâti porteur (1) composé d'un tronçon central (2) et de tronçons latéraux (3 et 4) disposés de part et d'autre du tronçon central (2), lesquels tronçons (2, 3, 4) sont articulés entre eux au moyen d'axes de pivotement (5 et 6) dirigés dans la direction d'avancement et autour desquels les tronçons latéraux (3 et 4) peuvent être déplacés avec des vérins hydrauliques (54 et 55) pour le transport, lesdits rotors (9) étant entraînés en rotation durant le travail au moyen d'arbres de transmission (50) qui sont logés dans les tronçons (2, 3, 4) constituant le bâti (1) et qui sont reliés entre eux par des accouplements (53) situés à proximité des axes de pivotement (5 et 6) entre les tronçons (2, 3, 4), caractérisée par le fait que chaque tronçon latéral (3, 4) du bâti (1) est composé de trois parties (22, 23 et 24) portant chacune au moins un rotor (9), que ces parties (22, 23 et 24) sont articulées entre elles au moyen d'axes (25 et 26) dirigés dans la direction d'avancement, que chacune de ces parties (22, 23 et 24) est déplaçable d'un angle d'environ 90° autour de son axe d'articulation (25, 26, 5 et 6) avec la partie voisine ou le tronçon central (2) et qu'elle comporte deux vérins hydrauliques (54 et 55) dont chacun assure à la fois le repliement en forme de U renversé ou le déploiement des parties (22, 23 et 24) d'un des tronçons latéraux (3 et 4) ainsi que le déplacement en hauteur d'un de ces tronçons latéraux (3 et 4), chaque vérin hydraulique (54, 55) étant relié au tronçon central (2) et à deux bielles (56 et 57) dont la première (56) est reliée à la partie intérieure (22) et la deuxième (57) à la partie extérieure (24) du tronçon latéral (3, 4) correspondant.

2. Machine selon la revendication 1, caractérisée par le fait que la partie intermédiaire (23) de chaque tronçon latéral (3, 4) se compose essentiellement d'un boîtier (32) portant un rotor (9) et de pattes de liaison (33 et 34) de chaque côté dudit boîtier.

3. Machine selon au moins une des revendications précédentes, caractérisée par le fait que la partie intermédiaire (23) de chaque tronçon latéral (3, 4) comporte deux butées (38, 39) dirigées vers le bas et deux butées (40, 41) dirigées vers le haut et que chacune des deux autres parties (22 et 24) comporte deux butées (42 et 43) dirigées vers le bas et deux butées (44 et 45) dirigées vers le haut, pour limiter le pivotement autour de leurs axes d'articulation (25 et 26).

4. Machine selon la revendication 1, caractérisée par le fait que dans la position de travail, la deuxième bielle (57) forme un angle (α) avec le vérin hydraulique (54 ou 55) correspondant, qui est plus grand que l'angle (β) que forme la première bielle (56) avec ledit vérin.

5. Machine selon la revendication 1 ou 4, caractérisée par le fait que dans la position de travail le point d'articulation (60) entre chaque vérin hydraulique (54 ou 55) et les deux bielles correspondantes (56 et 57) se situe au-dessus de la partie intermédiaire (23) du tronçon latéral (3, 4) correspondant.

6. Machine selon au moins une des revendications 1, 4 et 5, caractérisée par le fait que les deux bielles (56 et 57) de chaque vérin (54 ou 55) forment entre elles un V.

7. Machine selon au moins une des revendications 1 et 4 à 6, caractérisée par le fait que la bielle (57) qui est liée à la partie extérieure (24) de chaque tronçon latéral (3 ou 4) comporte un trou oblong dans lequel est engagé un pivot (59) solidaire de ladite partie extérieure.

8. Machine selon au moins une des revendications 1 et 4 à 7, caractérisée par le fait que la partie intérieure (22) et la partie extérieure (24) de chaque tronçon latéral (3 ou 4) comportent des butées (61 et 62) pour définir la position de transport en liaison avec les bielles (56 et 57).

## Patentansprüche

1. Heuwerbungsmaschine mit mehreren Rotoren (9) zum Wenden und/oder Schwaden, die an einem Tragrahmen angebracht sind, welcher aus einem Mittelsegment (2) und beiderseits des Mittelsegments (2) angeordneten Seitensegmenten (3 und 4) besteht, wobei diese Segmente (2, 3, 4) mittels in Fahrtrichtung gerichteter Schwenkachsen (5 und 6), um welche die Seitensegmente (3 und 4) für den Transport über Hydraulikzylinder (54 und 55) bewegt werden können, miteinander gelenkig verbunden sind, wobei die Rotoren (9) während der Arbeit in Drehung versetzt sind mittels Antriebswellen (50), die in den den Rahmen (1) bildenden Segmenten (2, 3, 4) gelagert und durch Kupplungen (53), die sich in der Nähe der Schwenkachsen (5 und 6) zwischen den Segmenten (2, 3, 4) befinden, miteinander verbunden sind, dadurch gekennzeichnet, dass jedes Seitensegment (3, 4) des Rahmens (1) aus drei jeweils zumindest einen Rotor (9) tragenden Teilen (22, 23 und 24) besteht, dass diese Teile (22, 23 und 24) mittels in Fahrtrichtung gerichteter Achsen (25 und 26) miteinander angelenkt sind, dass jedes dieser Teile (22, 23 und 24) in einem Winkel von ungefähr 90° um seine Gelenkachse (25, 26, 5 und 6) mit dem benachbarten Teil oder dem Mittelsegment (2) bewegt werden kann und dass sie zwei Hydraulikzylinder (54 und 55) von welchen jeder gleichzeitig das Zusammenklappen in Form eines Umgekehrten "U" oder das Ausbreiten der Teile (22, 23 und 24) eines der Seitensegmente (3 und 4) sowie die vertikale Bewegung eines dieser Seitensegmente (3 und 4) bewirkt, wobei jeder Hydraulikzylinder (54, 55) mit dem Mittelsegment (2) und mit zwei Lenkstangen (56 und 57) verbunden ist, von welchen die erste (56) mit dem inneren Teil (22) und die zweite (57) mit dem äusseren Teil (24) des entsprechenden Seitensegmentes (3, 4) verbunden ist.

2. Maschine nach dem Anspruch 1, dadurch gekennzeichnet, dass das Zwischenteil (23) eines jeden Seitensegments (3, 4) im wesentlichen aus einem einen Rotor (9) tragendes Gehäuse (32) und zwei Verbindungslappen (33 und 34) auf beiden Seiten des Gehäuses besteht.

3. Maschine nach zumindest einem der vorgehenden Ansprüche, dadurch gekennzeichnet, dass das Zwischenteil (23) eines jeden Seitensegments (3, 4) zwei nach unten gerichtete Anschläge (38, 39) und zwei nach oben gerichtete Anschläge (40, 41) aufweist und dass jedes der beiden anderen Teile (22 und 24) zwei nach unten gerichtete Anschläge (42 und 43) und zwei nach oben gerichtete Anschläge (44 und 45) aufweist, um die Schwenkung um deren Gelenkachsen (25 und 26) zu begrenzen.

4. Maschine nach dem Anspruch 1, dadurch gekennzeichnet, dass in Arbeitsstellung die zweite Lenkstange (57) mit dem entsprechenden Hydraulikzylinder (54 oder 55) einen Winkel (α) bildet, welcher grösser ist als der Winkel (β), den die erste Lenkstange (56) mit dem Zylinder bildet.

5. Maschine nach Anspruch 1 oder 4, dadurch gekennzeichnet, dass in Arbeitsstellung der Gelenkpunkt (60) zwischen jedem Hydraulikzylinder (54 oder 55) und den beiden entsprechenden Lenkstangen (56 und 57) sich über dem Zwischenteil (23) des entsprechenden Seitensegments (3, 4) befindet.

6. Maschine nach zumindest einem der Ansprüche 1, 4, und 5, dadurch gekennzeichnet, dass die zwei Lenkstangen (56 und 57) eines jeden Zylinders (54 oder 55) miteinander ein V bilden.

7. Maschine nach zumindest einem Anspruch 1 und 4 bis 6, dadurch gekennzeichnet, dass die Lenkstange (57) welche mit dem äusseren Teil (24) eines jeden Seitensegments (3 oder 4) verbunden ist, ein Langloch aufweist in welches ein mit dem äusseren Teil fest verbundener Gelenkzapfen (59) eindringt.

8. Maschine nach zumindest einem der Ansprüche 1 und 4 bis 7, dadurch gekennzeichnet, dass der innere Teil (22) und der äussere Teil (24) eines jeden Seitensegments (3 oder 4) Anschläge (61 und 62) aufweist um die Transportstellung in Zusammenhang mit den Lenkstangen (56 und 57) zu bestimmen.

## Claims

1. Haymaking machine comprising several tedding and/or swathing rotors (9) which are connected to a support structure (1) achieved in a central section (2) and in lateral sections (3 and 4) arranged on either side of the central section (2), said sections (2, 3, 4) being articulated with one another by means of pivoting axes (5 and 6) directed towards the direction of advance and around which the lateral sections (3 and 4) can be moved by means of hydraulic jacks (54 and 55) for the transport, said rotors (9) being driven in rotation during work by means of transmission shafts (50) which are housed in the sections (2, 3, 4) constituting the structure (1) and which are connected to one another by means of couplings (53) located near the pivoting axes (5 and 6) between the sections (2, 3, 4), characterised in that each lateral section (3, 4) of the structure (1) is achieved in three parts (22, 23 and 24) each carrying at least one rotor (9), that these parts (22, 23 and 24) are articulated with one another by means of axes (25 and 26) directed towards the direction of advance, that each of these parts (22, 23 and 24) can be moved according to an angle of about 90° around its axis of articulation (25, 26, 5 and 6) with the neighbouring part or the central section (2) and that it comprises two hydraulic jacks (54 and 55), each of which ensures both the folding in an inverted U shape and the unfolding of the parts (22, 23 and 24) of one of the lateral sections (3 and 4) as well as the moving in height of one of these lateral sections (3 and 4), each hydraulic jack (54, 55) being connected to the central section (2) and to two rods (56 and 57), the first (56) of which is connected to the inner part (22) and the second (57) to the outer part (24) of the corresponding lateral section (3, 4).

2. Machine according to claim 1, characterised in that the middle part (23) of each lateral section (3, 4) is essentially constituted by a casing (32) carrying a rotor (9) and connecting cramps (33 and 34) on each side of the said casing.

3. Machine according to at least one of the preceding claims, characterised in that the middle part (23) of each lateral section (3, 4) comprises two abutments (38, 39) directed downwards and two abutments (40, 41) directed upwards and that each of the two other parts (22 and 24) comprises two abutments (42 and 43) directed downwards and two abutments (44 and 45) directed upwards, to limit the pivoting around their axes of articulation (25 and 26).

4. Machine according to claim 1, characterised in that in the work position, the second rod (57) forms an angle (α) with the corresponding hydraulic jack (54 or 55) which is greater than the angle (β) which is formed by the first rod (56) with the said jack.

5. Machine according to claim 1 or 4, characterised in that in the work position the joint point (60) between each hydraulic jack (54 or 55) and the two corresponding rods (56 and 57) is located above the middle part (23) of the corresponding lateral section (3, 4).

6. Machine according to at least one of claims 1, 4 and 5, characterised in that the two rods (56 and 57) of each jack (54 or 55) form a V with one another.

7. Machine according to at least one of claims 1 and 4 to 6, characterised in that the rod (57) which is connected to the outer part (24) of each lateral section (3 or 4) comprises an oblong opening in which fits a pivot (59) which is rigidly attached to the said outer part.

8. Machine according to at least one of claims 1 and 4 to 7, characterised in that the inner part (22) and the outer part (24) of each lateral section (3 or 4) comprise abutments (61 and 62) to define the transport position in connection with the rods (56 and 57).
